# EUROPEAN PATENT APPLICATION

(11) **EP 2 410 720 A1**
(43) Date of publication of application: **25.01.2012**
(21) Application number: 11174442.1
(22) Date of filing: 19.07.2011
(51) Int. Cl.: H04M 1/02, G06F 1/16

(54) **Tilt slide module and mobile communication terminal having the same**

(30) Priority: 20.07.2010 KR 20100070168
(71) Applicant: Pantech Co., Ltd., Seoul 121-792 (KR)
(72) Inventor: Park, Sung Jun, 121-792 Seoul (KR); Kang, Choon Kwon, 121-792 Seoul (KR); Kwak, Sang Gil, 121-792 Seoul (KR); Song, Byung Ho, 121-792 Seoul (KR); Lee, Kang Gu, 121-792 Seoul (KR); Lee, Chun Won, 121-792 Seoul (KR); Lim, Tae Yong, 121-792 Seoul (KR)
(74) Representative: Herzog, Markus

(57) **Abstract**

A tilt slide module and a mobile communication terminal having the same includes a lower slide plate, an upper slide plate coupled to the lower slide plate to move in a sliding manner with respect to the lower slide plate wherein the upper slide plate is overlapped with the slower slide plate, a fixing piece wherein a hinge shaft is inserted in a hole provided thereon, and a tilt guide coupled to the fixing piece by the hinge shaft to be rotated about the hinge shaft.

## Description

### CROSS-REFERENCE TO RELATED APPLICATION

This application claims priority from and the benefit under 35 U.S.C. § 119(a) of Korean Patent Application No. 10-2010-0070168, filed on July 20, 2010, which is hereby incorporated by reference for all purposes as if fully set forth herein.

### BACKGROUND

1. FIELD

Disclosed herein are a tilt slide module and a mobile communication terminal having the same.

2. DISCUSSION OF THE BACKGROUND

A variety of modules are employed in mobile communication terminals. For example, in addition to a basic telephone call, the modules are used to execute a music listening function through an MP3 player, a gaming function, a public broadcast receiving function through a digital multimedia broadcasting (DMB) module, a picture or moving picture photographing function, an internet function, and the like.

As various functions are provided by mobile communication terminals, the designs and structures of the mobile communication terminals may change according to user's convenience. Particularly, an opening function in which an upper body having a display is opened in a sliding manner and then tilted may be applied to mobile communication terminals which open or close by a sliding mechanism.

A mobile communication terminal having a conventional tilt slide module may have a configuration in which a tilt module is separately assembled from a slide module. Accordingly, the structure of the tilt slide module may be more complicated, and the operation of the tilt slide module may not smoothly perform due to numerous parts. In addition, as the number of components in the tilt slide module may be increased, the manufacturing cost may correspondingly be increased.

If the tilt slide module has the configuration in which the tilt module is separately assembled to the slide module, the entire size of the tilt slide module may also be enlarged, and accordingly, much installation and operation space may be occupied.

Therefore, due to the limitations provided, it may be difficult to reduce the size of the mobile communication terminal with the conventional tilt slide module to meet the design demands by the consumers.

### SUMMARY

Exemplary embodiments of the present invention provide a tilt slide module to provide a tilt sliding function to a portable terminal.

Additional features of the invention will be set forth in the description which follows, and in part will be apparent from the description, or may be learned by practice of the invention.

Exemplary embodiments of the present invention provide a tilt slide module including a lower slide plate, an upper slide plate moved in a sliding manner with respect to the lower slide plate, the upper slide plate overlapping with the lower slide plate, a fixing piece wherein a hinge shaft is inserted in a hole provided thereon, and a tilt guide coupled to the fixing piece by the hinge shaft to rotate about the hinge shaft.

Exemplary embodiments of the present invention provide a mobile communication terminal including an upper body having a body cam, a lower body and the tilt slide module disposed between the upper body and the lower body. The tilt slide module includes a lower slide plate coupled to the lower body, an upper slide plate coupled to the upper body to move in a sliding manner with respect to the lower slide plate wherein the upper slide plate is overlapped with the lower slide plate, a fixing piece wherein a hinge shaft is inserted in a hole provided thereon, and a tilt guide coupled to the fixing piece by the hinge shaft to be rotated about hinge shaft.

Exemplary embodiments of the present invention provide a mobile communication terminal including an upper body having a body cam, a lower body and the tilt slide module disposed between the upper body and the lower body. The tilt slide module includes a lower slide plate coupled to the lower body, wherein the lower slide plate comprises a guide rail comprising a slide groove to provide sliding movement for the upper slide plate to move from a first position where the upper slide plate is retracted from the lower slide plate, and a second position where the upper slide plate is extended from the lower slide plate; an upper slide plate coupled to the upper body to move in a sliding manner with respect to the lower slide plate wherein the upper slide plate is overlapped with the lower slide plate; a fixing piece wherein a hinge shaft is inserted in a hole provided thereon; and a tilt guide coupled to the fixing piece by the hinge shaft to be rotated about hinge shaft, wherein the tilt guide comprises an opening to allow the fixing piece to be inserted therein, and a fixing cam is coupled to an upper surface of the fixing piece wherein the body cam of the upper body of the mobile communicative terminal is raised along the fixing cams of the tilt slide module to provide for a third position.

It is to be understood that both foregoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIGS. 1, FIG. 2 and FIG. 3 illustrate a tilt slide module according to an exemplary embodiment of the invention, in which FIG. 1 provides an exploded perspective view, FIG. 2 provides an assembled perspective view, and FIG. 3 provides a perspective view showing the tilt slide module with the upper slide plate in a tilted position.

FIG. 4 and FIG. 5 illustrate the tilt slide module according to an exemplary embodiment, wherein FIG. 4 provides a bottom perspective view illustrating the position of the upper slide plate prior to a tilt, and FIG. 5 provides a bottom perspective view illustrating the upper slide plate in a tilted position.

FIG. 6 is an exploded perspective view illustrating the tilt slide module that is separated from upper and lower bodies of a mobile communication terminal according to an exemplary embodiment of the invention.

FIG. 7 is a side view of the tilt slide module illustrating the mobile communication terminal in a first position according to an exemplary embodiment of the invention.

FIG. 8 is a side view of the tilt slide module illustrating the mobile communication terminal in a second position according to an exemplary embodiment of the invention.

FIG. 9 is a side view of the tilt slide module illustrating the mobile communication terminal in a third position according to an exemplary embodiment of the invention.

### DETAILED DESCRIPTION OF THE ILLUSTRATED EMBODIMENTS

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that when an element is referred to as being "on" or "connected to" or "coupled to" another element, it can be directly on, directly connected to, or directly coupled to the other element, or intervening elements may be present. Throughout the drawings and the detailed description, unless otherwise described, the same drawing reference numerals are understood to refer to the same elements, features, and structures. The relative size and depiction of these elements may be exaggerated for clarity, illustration, and convenience.

The terminology used herein is for the purpose of describing particular embodiments only and is not intended to be limiting of this disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defmed herein.

Hereinafter, exemplary embodiments of a tilt slide module and a mobile communication terminal having the same will be described in more detail with reference to the accompanying drawings. Both a sliding mechanism and a tilting mechanism are provided in the below discussion.

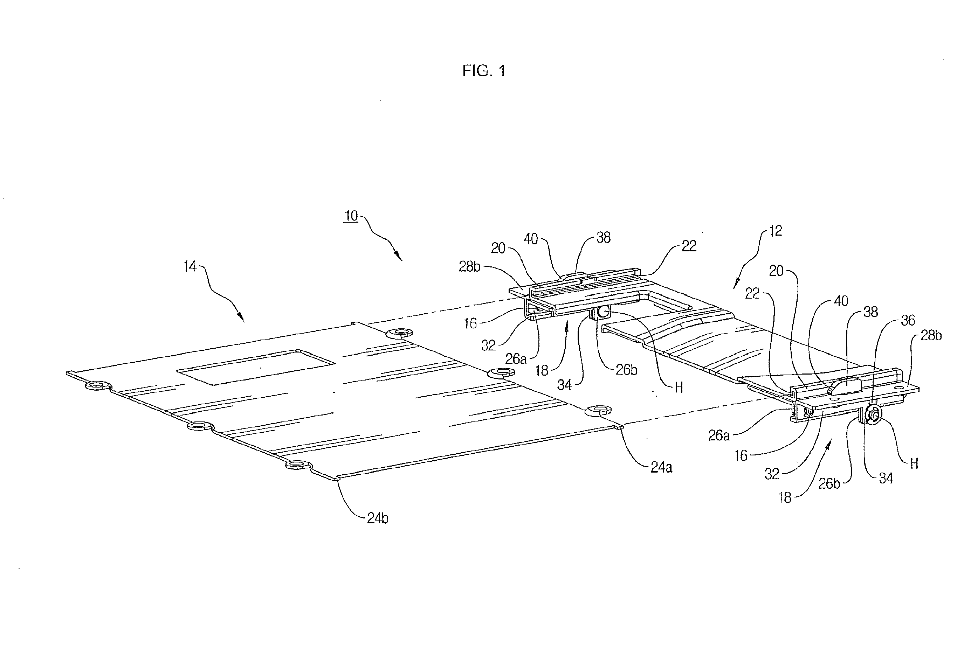

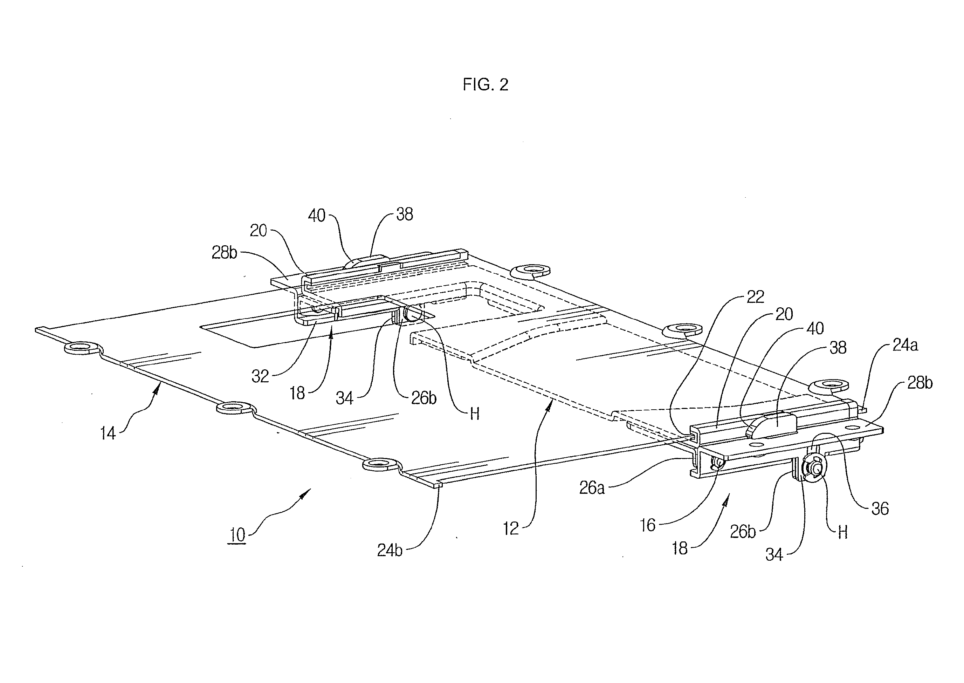

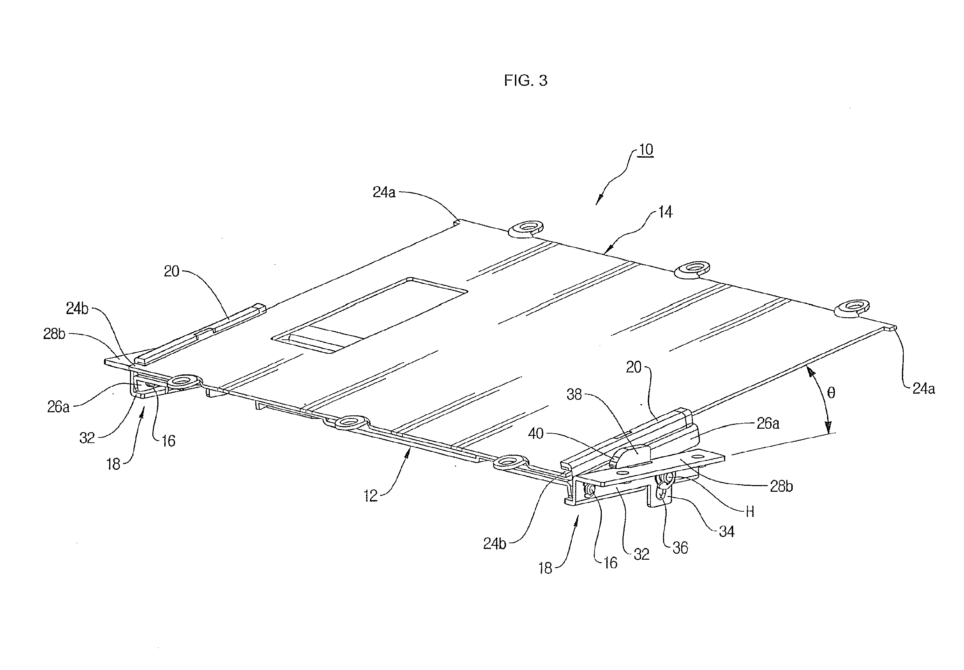

FIG. 1, FIG. 2, and FIG. 3 illustrate a tilt slide module according to an exemplary embodiment of the invention, in which FIG. 1 provides an exploded perspective view, FIG. 2 provides an assembled perspective view, and FIG. 3 provides a perspective view illustrating the tilt slide module with the upper slide plate in a tilted position.

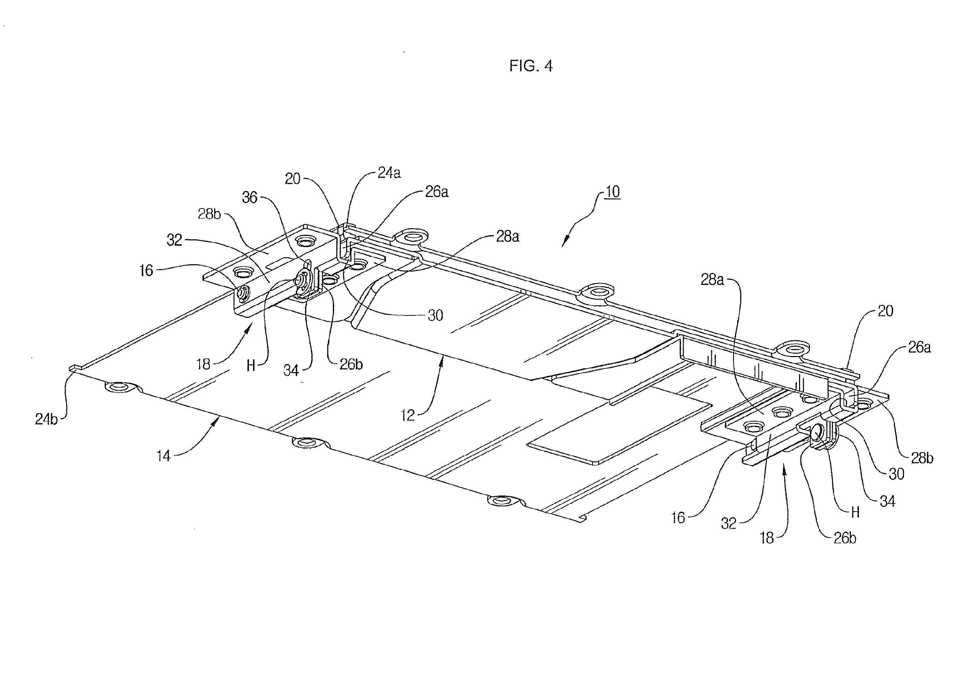

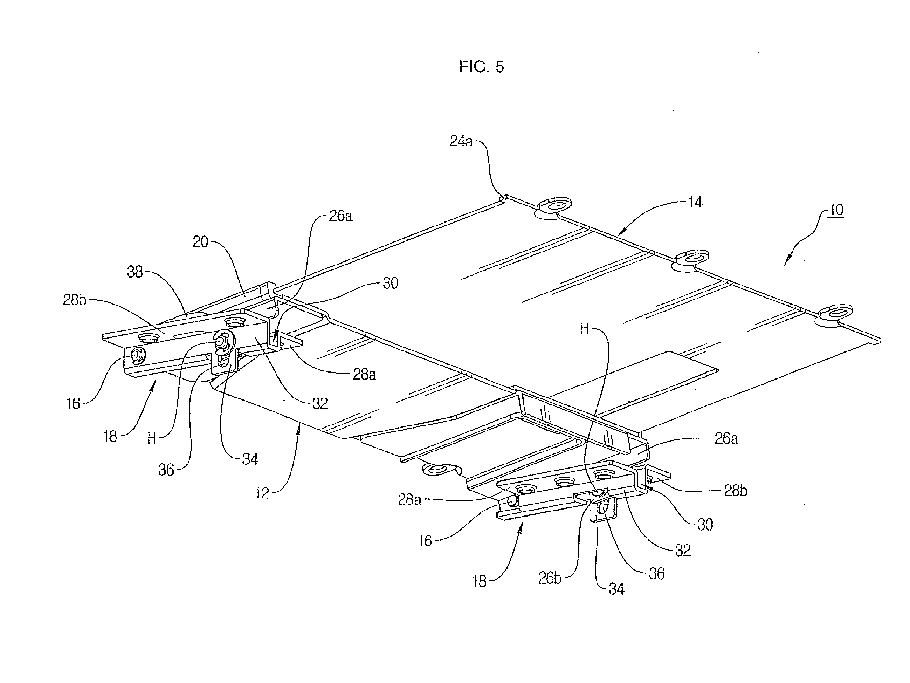

FIG. 4 and FIG. 5 illustrate the tilt slide module according to an exemplary embodiment, wherein FIG. 4 provides a bottom perspective view illustrating a position of the upper slide plate prior to a tilt, and FIG. 5 provides a bottom perspective view illustrating the upper slide plate in a tilted position.

First, the sliding operation of the tilt slide module 10 according to an exemplary embodiment is described below.

As shown in these figures, the tilt slide module 10 includes a lower slide plate 12, an upper slide plate 14, which moves in a sliding manner with respect to the lower slide plate 12 where the upper slide plate 14 is coupled to the lower slide plate 12, and a tilt guide 18. Further, the upper slide plate 14 moves in a sliding manner while being overlapped with the lower slide plate 12. The tilt guides 18 are mounted to one or both sides of the lower slide plate 12, to allow rotation of the lower slide plate 12 about hinge shafts 16. As the lower slide plate 12 overlaps the upper slide plate 14, the upper slide plate 14 rotates along with the lower slide plate 12.

Guide rails 20 guide the slide movement of the upper slide plate 14. More specifically, the upper slide plate 14 may be extracted and retracted from the lower slide plate 12 in a sliding manner along guide rails 20. In an example, the guide rails 20 may be provided on the upper surfaces of the lower slide plate 12 or other locations as desired. Further, a slide groove 22 may be provided within a guide rail 20 to provide the guiding mechanism for the sliding movement of the upper slide plate 14. Accordingly, a slide groove 22 may be provided in the interior of the guide rail 20 which may be opened in the length direction of the guide rail 20 and the inner direction of the lower slide plate 12, or any other location as desired.

Stoppers 24a and 24b for stopping extracting and retracting movement of the upper slide plate 14 protrude from both the front and the rear ends of the upper slide plate 14. In an example, stoppers 24a and 24b are inserted into the slide groove 22 of the lower slide plate 12. Although it has been shown in these figures in that the stoppers 24a and 24b are formed at both the front and rear ends of the upper slide plate 14, they are not limited to such a structure.

Secondly, the tilting operation of the tilt slide module 10 according to an exemplary embodiment will be described below.

Fixing pieces 26a for mounting the tilt guides 18 are provided. Fixing piece 26a includes a fixing portion 26b and a hole (not pictured) in which the hinge shaft 16 may be inserted. In an example, the fixing portion 26b may be a protruding part of the fixing piece 26a or a separate component coupled to the fixing piece 26a. The protruding fixing portion 26b may be inserted through an opening provided in a concave groove 30 of the tilt guide 18 when the tilt slide module 10 is in a first or second position. Further, fixing pieces 26a may be fixed to the lower surface of the lower slide plate 12. More specifically, the fixing pieces 26a may be disposed at lower positions of the guide rails 20.

Each of the tilt guides 18 includes coupling pieces 28a and 28b, a bending portion 32 which includes the concave groove 30, a fixing lug 34, a long hole 36, and another hole (not pictured) in which the hinge shaft 16 may be inserted. In an example, coupling pieces 28a and 28b are provided to both sides of the tilt guides 18 and a bending portion 32 is integrally formed between the coupling pieces 28a and 28b (see FIG. 5).

Further, a fixing cam 38 is provided on an upper surface of the coupling piece 28b of the tilt guide 18. The fixing cam 38 includes an inclined surface 40 inclined upward at one side of the fixing cam 38 to provide for a tilting mechanism as discussed in more detail below. The bending portion 32 has the concave groove 30 formed to allow the fixing piece 26a to be accommodated therein. Further, the concave groove 30 has an opening provided therein to allow the fixing portion 26b of the fixing piece 26a to be inserted.

As shown in FIG. 3, the fixing lug 34 protrudes downward from the bottom of the bending portion 32 of the tilt guide 18 and the long hole 36 is arranged in a direction perpendicular to the fixing lug 34. If a fixing portion 26b is disposed in parallel with the fixing lug 34 by passing through an opening provided in the concave groove 30 as shown in FIG. 4, a projection H may be inserted into the long hole 36 and the fixing portion 26b. Accordingly, projection H may couple the fixing piece 26a with the tilt guide 18 at the long hole 36. Alternatively, a shaft in place of the projection may be inserted into the fixing lug 34 by passing through the long hole 36 and the fixing portion 26b. In an example, the long hole 36 may be an elongated hole to allow a range of motion by the coupled fixing piece 26a from the tilt guide 18.

In addition, the fixing piece 26a and the tilt guide 18 are also coupled by the hinge shaft 16 to provide a rotatable connection structure. In an example, hinge shaft 16 may be provided at one end of the fixing piece 26a and the corresponding tilt guide 18 to provide for rotation of the coupled components about the hinge shaft 16. Accordingly, the lower slide plate 12 coupled to the fixing piece 26a may rotate at the hinge shaft 16 with respect to the lower slide plate 12. Further, the range of rotation by the lower slide plate 12 may be based on the range of motion provided by the long hole 36.

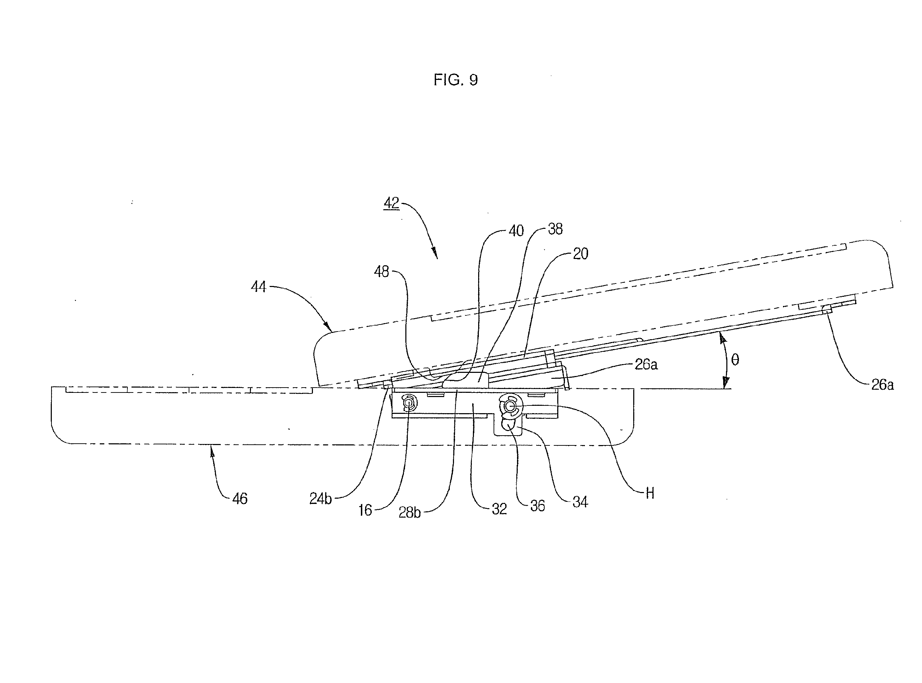

Thus, in a case where the tilt guides 18 are fixed at their positions, the lower slide plate 12 may be rotated in upper and lower directions with respect to the hinge shaft 16, but limited by the range of movement provided by the long hole 36. As shown in FIG. 3 and FIG. 9, a tilt angle θ may be determined by measuring the angle between the tilt guide 18 and the fixing piece 26a coupled to the tilt guide 18 rotated at the hinge shaft 16.

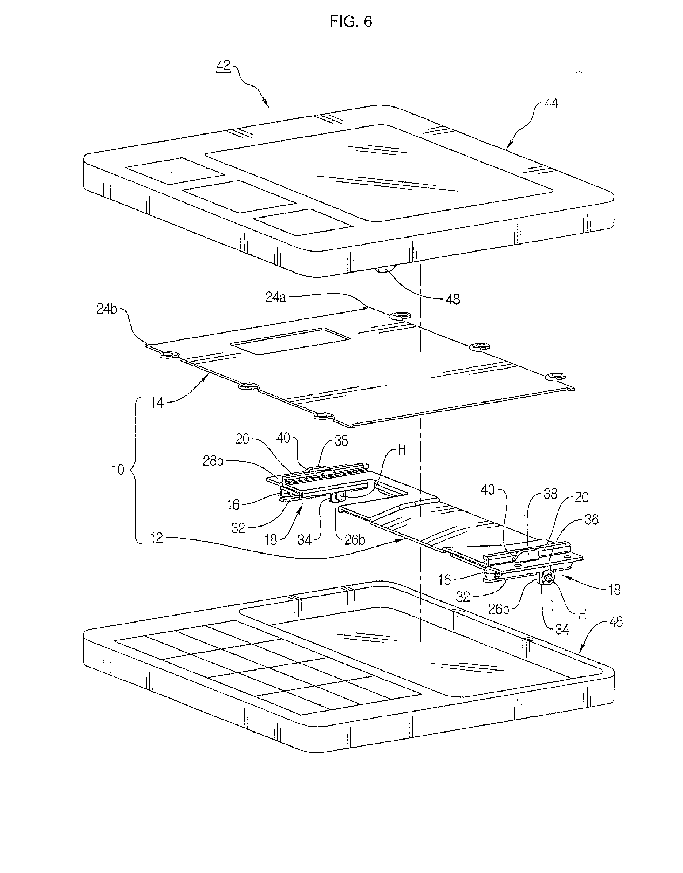

FIG. 6 is an exploded perspective view illustrating the tilt slide module that is separated from upper and lower bodies of a mobile communication terminal according to an exemplary embodiment of the invention.

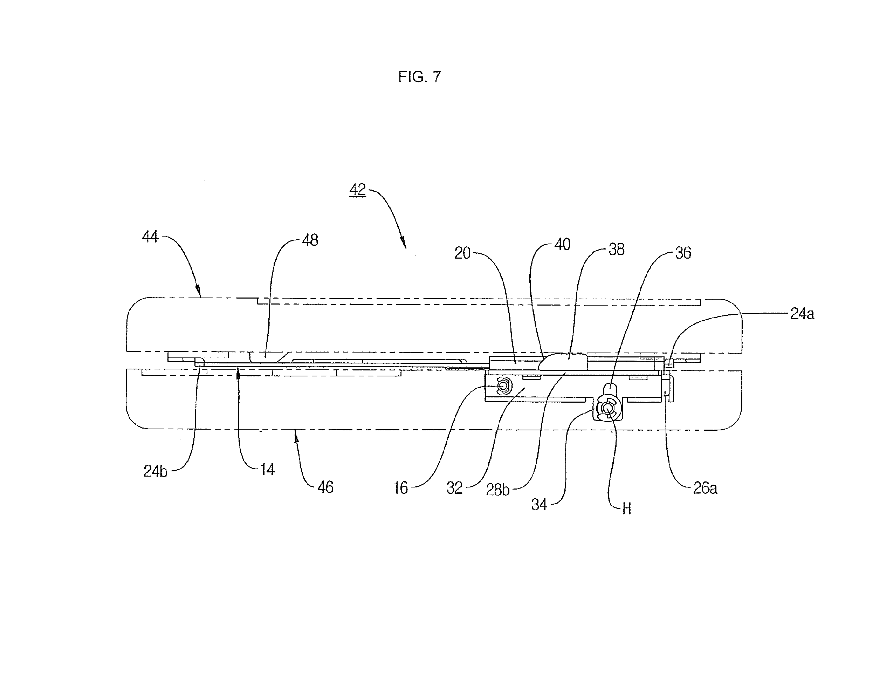

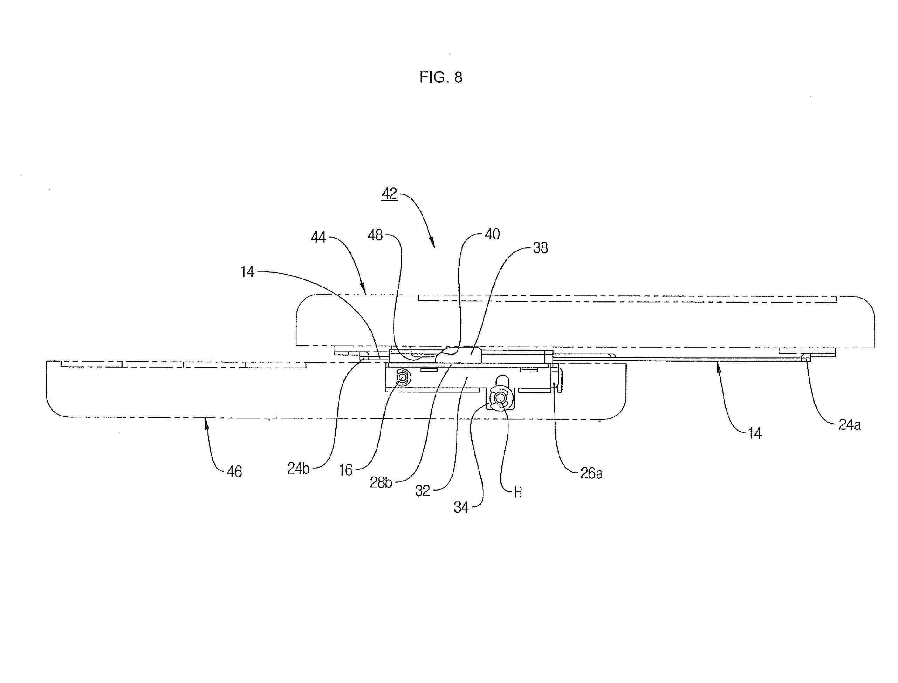

FIG. 7 is a side view of the tilt slide module illustrating the mobile communication terminal in a first position according to an exemplary embodiment of the invention. FIG. 8 is a side view of the tilt slide module illustrating the mobile communication terminal in a second position according to an exemplary embodiment of the invention. FIG. 9 is a side view of the tilt slide module illustrating the mobile communication terminal in a third position according to an exemplary embodiment of the invention.

As shown in FIG. 6, the tilt slide module 10 is disposed between upper body 44 and lower body 46 of mobile communication terminal 42.

In an example, the coupling pieces 28a and 28b of the tilt guide 18, mounted to the lower slide plate 12, are coupled to the upper surface of the lower body 46. Accordingly, the upper slide plate 14 may be coupled to the lower surface of the upper body 44.

As shown in FIG. 7, if the mobile communication terminal 42 is in a closed state with the tilt slide module 10 mounted thereto, the upper slide plate 14 is retracted into the guide rails 20 of the lower slide plate 12 to define a first position.

The fixing pieces 26a of the lower slide plate 12 are accommodated in the concave grooves 30 of the tilt guides 18, in the first position (see FIGS. 2, 4 and 7).

As shown in FIG. 8, the upper body 44 of the mobile communication terminal 42, coupled with the upper slide plate 14, is moved in a forward sliding direction to expose the lower body 46 to define a second position. More specifically, the upper slide plate 14 coupled with the upper body 44 is extracted from the guide rails 20 without tilting, in providing for the second position.

As shown in FIG. 9, if the upper body 44 is moved to the second position so that the body cam 48 provided to the upper body 44 comes in contact with the fixing cam 38, the body cam 48 provided to the upper body 44 is moved upward along the inclined surface 40 arranged on the fixing cam 38 to define a third position. In an example, the body cam 48 is located at the lower surface of the upper body 44.

Further, when the upper body 44, via body cam 48, is moved upward along the inclined surface 40 of the fixing cam 38, the fixing piece 26a of the lower slide plate 12 is rotated about the hinge shaft 16. In an example, the range of the rotation may be determined by the projection H coupled to the long hole 36 of the fixing lug 34. Accordingly, when the upper body 44 is tilted in the third position, the tilt angle θ may be determined by calculating the angle formed between projection H at the first position or the second position with the projection H at the third position.

In an example, as the upper body 44 is moved to the third position, the stoppers 24b at one side of the upper slide plate 14 may come in contact with the guide rail 20 and the projection H may come in contact with the upper limit of the long hole 36, so that the tilt-slide operation of the mobile communication terminal 42 may be determined to be completed (see FIGS. 3, 5 and 9).

By using the tilt slide module and the mobile communication terminal having the same according to the embodiment, the fixing piece 26a of the lower slide plate 12 may be exposed from the tilt guide 18 during the tilting operation. Through the exemplary embodiments provided herein, interference between the tilting and sliding operations may be reduced, which may provide for smoother performance of both operations.

Also, in the tilt slide module 10 according to the embodiment, the fixing piece 26a of the lower slide plate 12 may be exposed from the tilt guide 18 only in the tilting operation, and the tilt guides 18 may each have fixing cams 38 disposed at both the sides of the tilt slide module 10. Further, although the embodiments are shown with tilt guides 18 and fixing cams on two sides of the tilt slide module 10, other embodiments may be implemented with, for example, a fixing cam 38 on only one side of the tilt slide module 10, or a tilt guide 18 on only one side of the tilt slide module 10. Accordingly, through the use of the disclosed structures provided above, the tilt slide module and the mobile communication terminal may be reduced in size.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.
A tilt slide module and a mobile communication terminal having the same includes a lower slide plate, an upper slide plate coupled to the lower slide plate to move in a sliding manner with respect to the lower slide plate wherein the upper slide plate is overlapped with the lower slide plate, a fixing piece wherein a hinge shaft is inserted in a hole provided thereon, and a tilt guide coupled to the fixing piece by the hinge shaft to be rotated about the hinge shaft.

## Claims

1. A tilt slide module, comprising:
a lower slide plate;
an upper slide plate coupled to the lower slide plate and adapted to move in a sliding manner with respect to the lower slide plate, the upper slide plate overlapping with the lower slide plate;
a fixing piece wherein a hinge shaft is inserted in a hole provided thereon; and
a tilt guide coupled to the fixing piece by the hinge shaft and adapted to rotate about the hinge shaft.

2. The tilt slide module according to claim 1, wherein the tilt guide comprises:
a concave groove arranged in the tilt guide, the concave groove comprising an opening adapted to receive the fixing piece;
a long hole arranged in a side of the tilt guide and adapted to provide a range of motion; and
a projection inserted into the long hole, wherein the projection is adapted to couple the fixing piece and the tilt guide to move within the range of motion provided by the long hole.

3. The tilt slide module according to claim 2, wherein the tilt guide further comprises:
a coupling piece coupled to a side of the concave groove; and
a fixing cam coupled to an upper surface of the fixing piece; preferably an inclined surface being arranged at one side of the fixing cam.

4. The tilt slide module according to any of claims 1 to 3, wherein a guide rail adapted to guide the slide movement of the upper slide plate is provided to the upper surface of the lower slide plate.

5. The tilt slide module according to any of claims 1 to 4, wherein the lower slide plate comprises:
a guide rail comprising a slide groove adapted to guide sliding movement for the upper slide plate to move from a first position where the upper slide plate is retracted from the lower slide plate, to a second position where the upper slide plate is extended from the lower slide plate.

6. The tilt slide module according to claim 5, wherein the upper slide plate comprises a stopper protruding from an end of the upper plate, wherein the stopper is inserted into the slide groove to provide a sliding movement for the upper slide plate.

7. The tilt slide module according to any of claims 2 to 6, wherein the upper slide plate is rotated about the hinge shaft with respect to the lower slide plate to move to a third position,
wherein the upper slide plate rotation is limited by the range of motion provided by the long hole.

8. The tilt slide module according to any of claims 1 to 7, wherein the fixing piece is coupled to the lower surface of the lower slide plate.

9. A mobile communication terminal comprising an upper body having a body cam, a lower body and a tilt slide module, wherein the tilt slide module is disposed between the upper body and lower body,
wherein the tilt slide module comprises:
a lower slide plate coupled to the lower body;
an upper slide plate coupled to the upper body and adapted to move in a sliding manner with respect to the lower slide plate wherein the upper slide plate is overlapped with the lower slide plate;
a fixing piece wherein a hinge shaft is inserted in a hole provided thereon; and
a tilt guide coupled to the fixing piece by the hinge shaft to be rotated about the hinge shaft.

10. The mobile communication terminal according to claim 9, wherein the tilt guide comprises:
a concave groove arranged in the tilt guide, the concave groove comprising an opening adapted to receive the fixing piece;
a long hole arranged in a side of the tilt guide and adapted to provide a range of motion; and
a projection inserted into the long hole, wherein the projection couples the fixing piece and the tilt guide to move within the range of motion provided by the long hole.

11. The mobile communication terminal according to claim 10, wherein the tilt guide further comprises:
a coupling piece coupled to a side of the concave groove; and
a fixing cam coupled to an upper surface of the fixing piece, preferably an inclined surface being arranged at one side of the fixing cam.

12. The mobile communication terminal according to claim 11, wherein the body cam is raised along the fixing cams of the tilt slide module.

13. The mobile communication terminal according to any of claims 9 to 12,
wherein guide rail to guide the slide movement of the upper slide plate is provided to the upper surface of the lower slide plate.

14. The mobile communication terminal according to any of claims 9 to 13,
wherein the lower slide plate comprises a guide rail comprising a slide groove adapted to provide sliding movement for the upper slide plate to move from a first position where the upper slide plate is retracted from the lower slide plate, and a second position where the upper slide plate is extended from the lower slide plate;
wherein the tilt guide comprises an opening adapted to allow the fixing piece to be inserted therein, and a fixing cam is coupled to an upper surface of the fixing piece, and
wherein the body cam of the upper body of the mobile communicative terminal is raised along the fixing cams of the tilt slide module to provide for a third position.
